# FASCICULE DE BREVET EUROPEEN

(11) **EP 1 032 897 B1**
(45) Date de publication et mention de la délivrance du brevet: **16.08.2001**
(21) Numéro de dépôt: 98955707.9
(22) Date de dépôt: 20.11.1998
(51) Int. Cl.: G06F 17/30, H04N 1/00

(54) **PROCEDE DE NAVIGATION SUR RESEAU INFORMATIQUE ET TELECOPIEUR POUR LA MISE EN OEUVRE DU PROCEDE**
NAVIGATIONSVERFAHREN IN EINEM NETZWERK UND FAKSIMILEGERÄT ZUR ANWENDUNG DES VERFAHRENS
METHOD FOR NAVIGATING ON A COMPUTER NETWORK AND FAX MACHINE FOR IMPLEMENTING SAID METHOD

(30) Priorité: 21.11.1997 FR 9714665
(43) Date de publication de la demande: 06.09.2000
(73) Titulaire: SAGEM S.A., 75116 Paris (FR)
(72) Inventeur: GAVOILLE, Laurent, F-78700 Conflans Sainte Honorine (FR); CAZIN, Dominique, F-92150 Suresnes (FR)
(74) Mandataire: Bloch, Gérard
(86) Numéro de dépôt international: FR9802484
(87) Numéro de publication internationale: WO9927468

(56) Documents cités:
- WO-A-97/10668
- SLATER A F: "Extending W3 clients" COMPUTER NETWORKS AND ISDN SYSTEMS, vol. 28, no. 1, décembre 1995, page 61-68 XP004001211
- GESSLER S ET AL: "PDAs as mobile WWW browsers" COMPUTER NETWORKS AND ISDN SYSTEMS, vol. 28, no. 1, décembre 1995, page 53-59 XP004001210

## Description

Pour obtenir des informations qu'il recherche, l'utilisateur d'un PC relié à un réseau informatique comme celui de l'INTERNET doit pouvoir déterminer l'adresse du serveur pertinent. Une fois joint, le serveur émet en retour une page de présentation avec du texte et différentes zones permettant chacune, en cliquant dessus par la souris du PC, d'appeler une autre page du même genre contenant par exemple des informations plus détaillées sur le sujet annoncé dans la zone sélectionnée par la souris.

Ces zones permettent ainsi de commander des reroutages de l'appel vers diverses pages du serveur et surtout de joindre un autre serveur en fonction des informations recherchées. Ces zones de sélection d'autres pages sont de ce fait appelées liens, unissant les adresses des serveurs aux sujets qu'ils y annoncent même si l'on ne connaît pas les adresses de ceux-ci.

Les reroutages ainsi effectués par ces liens constituent une navigation entre serveurs de l'INTERNET.

Cette navigation, qui peut prendre un temps considérable, nécessite d'avoir une bonne perception du contexte environnant le lien qui va être sélectionné, afin de choisir, parmi les sujets ou pages proposés par les divers serveurs, celui qui est le plus pertinent. C'est pourquoi la page affichée sur l'écran du PC comporte un assez grand nombre d'indications, texte et image, pour aider dans le choix de la page suivante.

La demanderesse a cependant voulu pouvoir naviguer sur l'INTERNET, pour au moins déterminer l'adresse du serveur le plus pertinent, avec un appareil, tel un télécopieur, ne disposant que d'un écran de taille limitée, beaucoup trop petit pour afficher une page entière. C'est ainsi qu'elle propose son invention.

L'article « Extending W3 clients » de Slater, Computer Networks and ISDN Systems, Vol. 28, n°1, décembre 1995, p 61-68 enseigne d'afficher tel quel un document sur un écran, en masquant toutefois les informations autres que les liens, pour mettre ceux-ci en évidence. Il enseigne par ailleurs de découper le document en sous-documents, ou résumés, que l'on appelle par des liens locaux. Un document n'est pas spécifié comme étant limité à une page : le document est plus grand que l'écran mais on ne peut en déduire que l'écran est de petite taille. En fait, une solution au problème d'affichage dû à un écran plus petit qu'un document est proposée au paragraphe 2.3 de ce document et consiste à afficher un tronçon de document avec, pour les liens, des cartouches de taille réduite ne contenant qu'un numéro.
L'article « PDAs as mobile WWW browsers », Gessler et col., p 53-59 du document ci-dessus enseigne un balayage des informations.

L'invention concerne tout d'abord un procédé de navigation sur réseau informatique avec un appareil de traitement de données comportant, d'une part, un écran de taille inférieure à celle d'une page de serveur qui comporte des informations et des zones de sélection d'autres pages, et, d'autre part, des moyens de désignation d'une zone de l'écran, procédé caractérisé par le fait qu'on repère les zones de sélection, on les fournit à l'écran, à l'exclusion des informations, l'écran les affiche en un bloc de données, et on appelle une autre page par désignation d'une des zones affichées.

On peut ainsi, avec des moyens très élémentaires, commander les reroutements nécessaires par les zones de sélection, ou liens, pour atteindre le serveur pertinent et en connaître l'adresse. Les informations fournies par le serveur peuvent être mémorisées dans l'appareil et restituées par tout moyen de relation homme-machine, visuel ou sonore, par exemple par défilement sur l'écran.

Avantageusement, si l'appareil de traitement de données comporte une imprimante, on dilate fictivement l'écran à la taille de la page de serveur par impression de la totalité de celle-ci.

On peut ainsi éditer une page, soit pendant la nagivation, pour mieux saisir le contexte des zones de sélection, en vérifiant ainsi la pertinence des informations de la page pour décider de poursuivre ou non la navigation, soit en fin de navigation, pour éditer les informations pertinentes.
L'invention concerne aussi un télécopieur pour la mise en oeuvre du procédé de l'invention, comportant des moyens de réception de pages d'informations électroniques associés à des moyens d'analyse de page, agencés pour y détecter des zones de sélection, d'autres pages, caractérisé par le fait que les moyens d'analyse sont agencés pour fournir en bloc les zones de sélection à des moyens d'affichage, associés à des moyens de désignation d'une zone affichée et de commande de moyens d'appel d'un serveur d'une autre page.

L'invention sera mieux comprise à l'aide de la description suivante d'un mode préféré de mise en oeuvre du procédé de l'invention, en référence au dessin annexé, sur lequel :

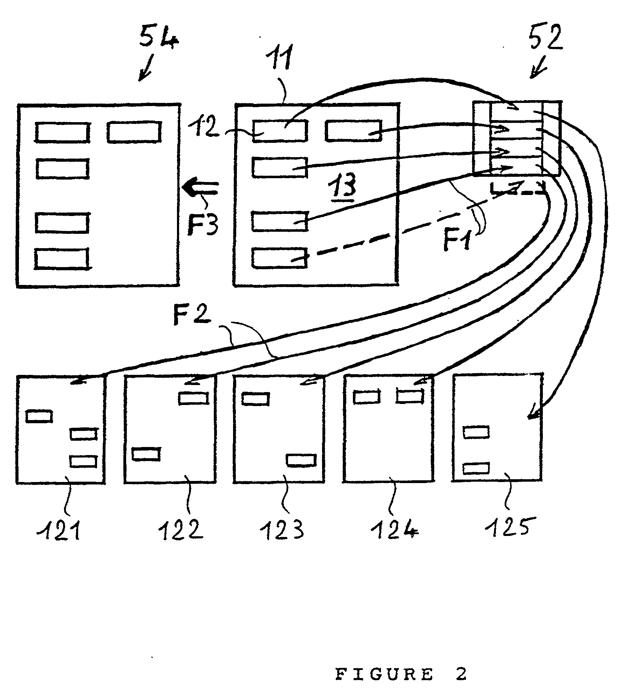

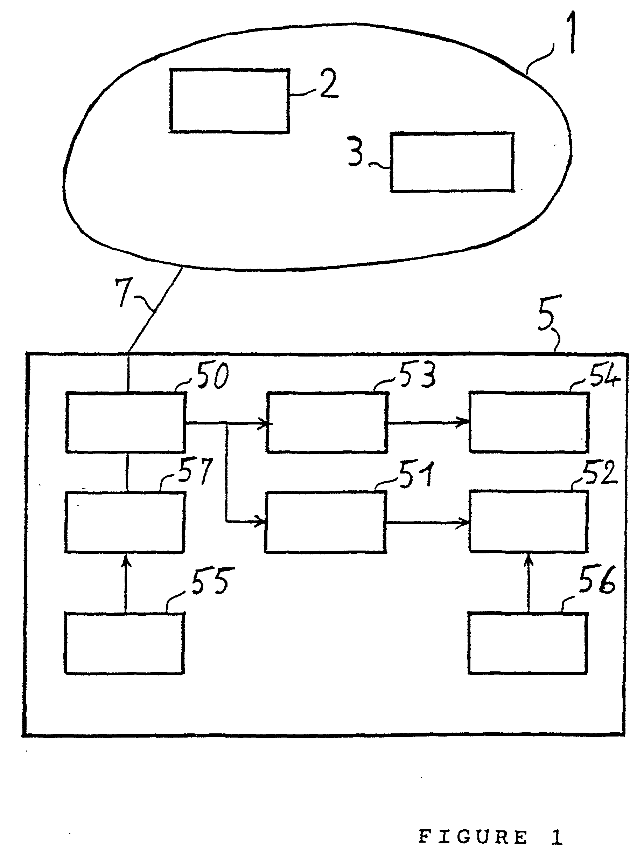

- la figure 1 est un schéma par blocs d'un télécopieur, relié à un serveur de l'INTERNET, pour la mise en oeuvre du procédé de l'invention, et
- la figure 2 est un diagramme illustrant le procédé.

Le réseau informatique 1 de transmission de données est ici l'INTERNET et il comporte des serveurs tels que ceux référencés 2 et 3.

L'appareil de traitement de données 5 est ici un télécopieur agencé pour dialoguer avec des serveurs de l'INTERNET et qui est relié, par une ligne téléphonique 7, à l'INTERNET 1. Il comporte une mémoire 50 d'émission de commandes sur l'INTERNET 1 et de réception de pages de serveurs comportant des informations et des zones de sélection d'autres pages. La mémoire 50 commande, à travers un circuit 53 de conversion en pixels des informations reçues telles que texte ou images au format HTML, une imprimante 54, ici prévue, et commande, à travers un circuit 51 d'analyse de page, un écran 52.

Il est en outre prévu un clavier ou pupitre de commande 55, pour commander en particulier un circuit 57 d'émission d'appels vers des serveurs comme 2, 3 et de gestion des échanges avec ceux-ci, en relation avec la mémoire 50.

Il est en outre prévu un pavé 56 de quatre touches de navigation commandant un curseur optique sur l'écran 52; une souris peut de même être prévue.

La figure 2 illustre les aspects graphiques du procédé. Une page 11 hypertexte, ou format HTML, reçue d'un serveur 2 ou 3, appelé à travers la ligne 7, comporte des informations concernant le sujet pour lequel le serveur 2, 3 est consulté, ainsi que des zones 12 de sélection d'autres pages hypertexte, du même serveur ou, en général, d'autres serveurs 2, 3. Les zones 12, ou liens, représentent donc les adresses des pages correspondantes 121, 122, 123, 124 et 125 susceptibles d'être appelées automatiquement par l'utilisateur du télécopieur 5.

Selon le procédé de l'invention, on affiche sur l'écran 52 les zones de sélection 12, à l'exclusion des informations 13 et on appelle une autre page 121 à 125 par désignation d'une des zones 12 affichées.

Les cinq flèches F1 illustrent la fonction du circuit 51, qui analyse la page courante 11 pour y repérer, d'après des motifs d'en-tête, les zones 12, ici au nombre de cinq, et les fournir à l'écran 52 pour les afficher en un bloc de données. L'écran 52 comporte ici quatre lignes, permettant chacune d'afficher l'une des zones 12. La cinquième zone 12, débordant de l'écran 52, est représentée en lignes en pointillés sous celui-ci, si bien qu'on fait défiler les zones 12, pour pouvoir toutes les lire, puisque la taille totale de ces zones excède celle de l'écran 52.

Pour sélectionner l'une des zones 12 affichées, les touches de navigation 56 permettent de déplacer un curseur, d'une ligne à l'autre de l'écran 52, et le clavier 55 permet de valider le choix et d'activer le circuit 57 pour appeler la page suivante ainsi sélectionnée (flèches F2).

Il peut en outre être prévu d'afficher des champs de saisie de données, telles que mot de passe, champs que l'on associe, par les touches 56, au clavier 55, servant alors à saisir les données du champ considéré.

Pour pouvoir cependant prendre connaissance des informations 13, le clavier 55 permet de commander un passage en mode alterné, dans lequel on affiche alternativement sur l'écran 52 les zones 12 et une fenêtre, de la taille de l'écran 52, de balayage de la page 11, le balayage étant commandé par les touches 56.

En outre, l'utilisateur peut imprimer à tout moment (flèche F3) la page 11 courante sur l'imprimante 54, ou appeler et imprimer l'une des pages 121 à 125 suivantes, par commande depuis le clavier 55, le circuit 53 effectuant la conversion des informations reçues constituant la page, y compris les zones 12, en une page en format pixels. Il peut ainsi avoir une meilleure perception du contexte de sa navigation et il peut garder une trace imprimée d'informations recherchées. En d'autres termes, on dilate fictivement l'écran 52 à la taille de la page 11 par impression de la totalité de celle-ci.

La mémoire 50 permet en outre, sous la commande du clavier 55, de mémoriser l'adresse associée à la page affichée et ainsi de pouvoir l'appeler ultérieurement.

Il est en outre prévu que l'on puisse, par le clavier 55, saisir une requête de rappel d'une page 11 précédente, c'est-à-dire que la mémoire 50 conserve les données correspondantes et/ou l'adresse d'accès à la page. Le clavier 55 permet en outre de demander, par commande du circuit 57, une répétition de l'envoi d'une page 11 de serveur, par exemple si celle-ci a été entachée d'erreurs de transmission. De même, le clavier 55 permet d'arrêter une recherche en cours dans l'INTERNET 1.

## Revendications

1. Procédé de navigation sur réseau informatique avec un appareil de traitement de données comportant, d'une part, un écran (52) de taille inférieure à celle d'une page (11) de serveur qui comporte des informations (13) et des zones (12) de sélection d'autres pages (11), et, d'autre part, des moyens (55, 56) de désignation d'une zone (12) de l'écran (52), procédé caractérisé par le fait qu'on repère les zones de sélection (12), on les fournit à l'écran (52), à l'exclusion des informations (13), l'écran les affiche en un bloc de données, et on appelle une autre page (121 à 125) par désignation d'une des zones affichées (12).

2. Procédé selon la revendication 1, dans lequel on affiche en outre des champs de saisie de données, que l'on associe, par les moyens de désignation (55, 56), à des moyens de saisie (55).

3. Procédé selon l'une des revendications 1 et 2, dans lequel on fait défiler les zones de sélection (12) lorsque la taille totale de celles-ci excède celle de l'écran (52).

4. Procédé selon l'une des revendications 1 à 3, dans lequel, l'appareil de traitement de données comportant une imprimante, on dilate fictivement l'écran (52) à la taille de la page de serveur (11) par impression (54) de la totalité de celle-ci.

5. Procédé selon l'une des revendications 1 à 4, dans lequel on affiche alternativement sur l'écran (52) les zones de sélection (12) et une fenêtre de balayage de la page (11).

6. Télécopieur pour la mise en oeuvre du procédé de la revendication 1, comportant des moyens (50, 58) de réception de pages d'informations électroniques (11) associés à des moyens (51) d'analyse de page (11), agencés pour y détecter des zones de sélection (12) d'autres pages (121 à 125), caractérisé par le fait que les moyens d'analyse (51) sont agencés pour fournir en bloc les zones de sélection (12) à des moyens d'affichage (52), associés à des moyens (55, 56) de désignation d'une zone affichée (12) et de commande de moyens d'appel (57) d'un serveur (2, 3) d'une autre page (121 à 125).

7. Télécopieur selon la revendication 6, dans lequel il est prévu des moyens (50) de mémorisation d'une zone désignée.

8. Télécopieur selon l'une des revendications 6 et 7, dans lequel les moyens de désignation (55, 56) sont agencés pour, sur requête, rappeler une page précédente.

9. Télécopieur selon l'une des revendications 6 à 8, dans lequel les moyens de désignation (55, 56) sont agencés pour commander, par les moyens d'appel (57), une répétition de l'envoi d'une page (11) par un serveur.

10. Télécopieur selon l'une des revendications 6 à 9, dans lequel il est prévu des moyens (53) de commande d'une imprimante (54) agencés pour convertir une page en format HTML en une page en format pixels.

## Patentansprüche

1. Verfahren zur Navigation in einem Informatik-Netzwerk mit einer Datenverarbeitungsanlage, die einerseits einen Bildschirm (52) aufweist, der eine kleinere Größe hat als die einer Seite eines Servers, die Informationen (13) und Zonen (12) zur Auswahl von anderen Seiten (11) aufweist, und andererseits Mittel (55, 56) zur Bezeichnung einer Zone (12) des Bildschirms (52) aufweist, wobei das Verfahren dadurch gekennzeichnet ist, daß man die Auswahlzonen (12) markiert, sie unter Ausschluß der Informationen (13) an den Bildschirm (52) liefert, wobei sie der Bildschirm als einen Datenblock anzeigt, und eine andere Seite (121 bis 125) durch Bezeichnung einer der angezeigten Zonen (12) aufruft.

2. Verfahren nach Anspruch 1, dadurch gekennzeichnet, daß man außerdem Datenerfassungsfelder anzeigt, die man über die Bezeichnungsmittel (55, 56) den Erfassungsmitteln (55) zuordnet.

3. Verfahren nach einem der Ansprüche 1 oder 2, dadurch gekennzeichnet, daß man die Auswahlzonen (12) ablaufen läßt, wenn ihre gesamte Größe die des Bildschirms (52) überschreitet.

4. Verfahren nach einem der Ansprüche 1 bis 3, dadurch gekennzeichnet, daß die Datenverarbeitungsanlage einen Drucker aufweist, wobei man den Bildschirm (52) fiktiv auf die Größe der Seite des Servers (11) ausdehnt, indem diese insgesamt gedruckt wird (54).

5. Verfahren nach einem der Ansprüche 1 bis 4, dadurch gekennzeichnet, daß man alternativ auf dem Bildschirm (52) die Auswahlzonen (12) und ein Fenster zur Abtastung der Seite (11) anzeigt.

6. Fernkopierer zur Umsetzung des Verfahrens nach Anspruch 1, mit Mitteln (50, 58) für den Empfang von Seiten mit elektronischer Information (11), die Mitteln (51) zur Analyse einer Seite (11) zugeordnet sind, und dafür eingerichtet sind, darin Zonen zur Auswahl (12) von anderen Seiten (121 bis 125) zu erfassen, dadurch gekennzeichnet, daß die Analysemittel (51) so eingerichtet sind, daß sie die Auswahlzonen (12) als Block an eine Anzeigeeinrichtung (52) liefern, die Mitteln (55, 56) zur Bezeichnung einer angezeigten Zone (12) und zur Steuerung von Mitteln zum Abruf (56) einer weiteren Seite (121 bis 125) von einem Server (2, 3) zugeordnet ist.

7. Fernkopierer nach Anspruch 6, dadurch gekennzeichnet, daß Mittel (50) zur Speicherung einer bezeichneten Zone vorgesehen sind.

8. Fernkopierer nach einem der Ansprüche 6 und 7, dadurch gekennzeichnet, daß die Bezeichnungsmittel (55, 56) dafür eingerichtet sind, um auf Anfrage eine vorhergehende Seite zurückzuholen.

9. Fernkopierer nach einem der Ansprüche 6 bis 8, dadurch gekennzeichnet, daß die Bezeichnungsmittel (55, 56) dafür eingerichtet sind, um über die Abrufmittel (57) eine Wiederholung der Übertragung einer Seite (11) durch einen Server zu veranlassen.

10. Fernkopierer nach einem der Ansprüche 6 bis 9, dadurch gekennzeichnet, daß Mittel (53) zur Ansteuerung eines Druckers (54) vorgesehen sind, die so eingerichtet sind, um eine Seite im Format HTML in eine Seite im Pixelformat umzuwandeln.

## Claims

1. Method for navigating on a computer network with a data processing apparatus comprising, firstly, a screen (52) smaller in size than a server page (11) which includes information (13) and areas (12) for selecting other pages (11) and, secondly, means (55, 56) for designating one area (12) of the screen (52), a method characterised by the fact that the selection areas (12) are located and provided to the screen (52), to the exclusion of the information (13), the screen displays them in a data block, and another page (121 to 125) is called up by designation of one of the displayed areas (12).

2. Method according to claim 1, wherein in addition data acquisition fields are displayed and associated, via the designation means (55, 56), with acquisition means (55).

3. Method according to one of claims 1 and 2, wherein one scrolls through the selection areas (12) when the total size of the latter exceeds that of the screen (52).

4. Method according to one of claims 1 to 3, wherein, since the data processing apparatus includes a printer, there is imaginary expansion of the screen (52) to the size of the server page (11) by printing (54) the latter in its entirety.

5. Method according to one of claims 1 to 4, wherein the selection areas (12) and a window for scanning the page (11) are displayed alternately on the screen (52).

6. Fax machine for implementing the method of claim 1, comprising means (50, 58) for receiving pages (11) of electronic information associated with means (51) for analysing pages (11), arranged to detect therein areas (12) for selecting other pages (121 to 125), characterised by the fact that the analysing means (51) are arranged to supply the selection areas (12) as a block to display means (52), associated with means (55, 56) for designating a displayed area (12) and for controlling means (57) of calling up a server (2, 3) of another page ( 121 to 125).

7. Fax machine according to claim 6, wherein means (50) for storing a designated area are provided.

8. Fax machine according to one of claims 6 and 7, wherein the designation means (55, 56) are arranged to recall a preceding page, on request.

9. Fax machine according to one of claims 6 to 8, wherein the designation means (55, 56) are organised to control, via the call means (57), a repetition of the transmission of a page (11) by a server.

10. Fax machine according to one of claims 6 to 9, wherein means (53) for controlling a printer (54) are provided which are arranged to convert a page in HTML format into a page in pixel format.
